(19) Europäisches Patentamt

European Patent Office

Office européen des brevets

(11) Veröffentlichungsnummer: **0 363 595 B1**

## (12) EUROPÄISCHE PATENTSCHRIFT

(45) Veröffentlichungstag der Patentschrift: **29.06.94**

(21) Anmeldenummer: **89114549.2**

(22) Anmeldetag: **07.08.89**

(51) Int. Cl.⁵: **B29C 51/14**, B29C 51/36, B29C 51/42, B29C 51/02, //B29L31:58

(54) **Verfahren und Vorrichtung sowie Kunststoffolienbahn zur Herstellung von Formteilen oder Gegenständen.**

(30) Priorität: **11.10.88 DE 3834620**

(43) Veröffentlichungstag der Anmeldung:
**18.04.90 Patentblatt 90/16**

(45) Bekanntmachung des Hinweises auf die
Patenterteilung:
**29.06.94 Patentblatt 94/26**

(84) Benannte Vertragsstaaten:
**AT BE CH DE ES FR GB GR IT LI LU NL SE**

(56) Entgegenhaltungen:
EP-A- 0 268 719        EP-A- 0 288 728
EP-A- 0 288 733        WO-A-85/02142
DE-A- 3 800 218        DE-U- 8 706 204
FR-A- 2 424 815        GB-A- 2 143 463

PATENT ABSTRACTS OF JAPAN, Band 9, Nr.
322 (M-440)[2045], 18. Dezember 1985;& JP-
A-60 157 838 (MEIWA SANGYO K.K.)
19-08-1985

PATENT ABSTRACTS OF JAPAN, Band 9, Nr.
215 (M-409)[1938], 3. September 1985;& JP-

A-60-73 831 (TOPPAN INSATSU K.K.)
26-04-1985

PATENT ABSTRACTS OF JAPAN, Band 10,
Nr. 357 (M-540)[2414], 2. Dezember 1986;&
JP-A-61 154 922 (TAKASHIMAYA NITSUPAT-
SU KOGYO K.K.) 14-07-1986

(73) Patentinhaber: **ALKOR GMBH KUNSTSTOFFE**
**Postfach 71 01 09,**
**Morgensternstrasse 9**
**D-81451 München(DE)**

(72) Erfinder: **Landler, Josef**
**Schiesstättstrasse 81**
**D-8190 Wolfratshausen(DE)**

**Beschreibung**

Die vorliegende Erfindung betrifft ein Verfahren und eine Vorrichtung zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren, wobei die vorzugsweise eingespannte oder vorgespannte Kunststoffolie, kunststoffhaltige Bahn oder Kunststoffplatte unter Mitverwendung eines Druckunterschiedes und unter Erwärmung in die Negativtiefziehform eingebracht und in der Negativtiefziehform verformt wird, wobei die Kunststoffolie, kunststoffhaltige Bahn oder Kunststoffplatte unter Narbgebung und/oder Oberflächendekoration verformt wird und die Narbgebung und/oder Oberflächendekoration der Kunststoffolie, kunststoffhaltigen Bahn oder Kunststoffplatte durch eine poröse, luftdurchlässige, vorzugsweise mikroporöse, luftdurchlässige Formoberfläche aufweisende Negativtiefziehform erfolgt oder durch eine nicht poröse, genarbte oder Oberflächendekoration in Negativform enthaltenden Formoberfläche erfolgt, wobei zwischen der Werkzeugtemperatur und der Kunststoffolie, kunststoffhaltigen Bahn oder Kunststoffplatte ein Temperaturunterschied von mehr als 30 K, vorzugsweise mehr als 80 K, eingehalten und eine mindestens zweischichtige Kunststoffolie, -bahn oder -platte eingesetzt wird.

Aus der DE-OS 3505828 ist bereits ein Verfahren zur Herstellung geformter Kunststoffelemente, insbesondere ausschäumbarer Kraftfahrzeugverkleidungenaus tiefziehbaren thermoplastischen Kunststoffolien bekannt. Nach diesem Verfahren wird eine von einem Spannrahmen gehaltene Folienbahn bis zur Verformbarkeit erwärmt und in einer dem Formwerkzeug entsprechende allgemeinen Kontur vorformend aufgewölbt, worauf das Formwerkzeug in die Aufwölbung der vorgeformten Folie eingefahren und diese durch Erzeugung eines Druckunterschiedes zwischen Folie und Oberfläche des Formwerkzeuges an diesem endgültig verformt und nach Abkühlung von diesem abgenommen wird.

Dabei werden Monofolien von der dem Formwerkzeug zugewandten Rückseite her erhitzt und ein Temperaturunterschied zwischen Vorder- und/oder Dekorseite und Rückseite herbeigeführt, wobei die Rückseite, die auf das Formwerkzeug (20) gebracht wird, eine höhere Erhitzung erfährt als die Vorderseite. Dadurch erhält man quer zur Foliendicke zwischen der in dem plastischen Bereich gebrachten Folienbreite und der Vorder- oder Dekorseite einen Temperaturunterschied. Dieses Verfahren hat den Nachteil, daß die Vorder- und/oder Dekorseite nicht geprägt oder in sonstiger Weise mit Dekorierungen versehen werden kann. Dadurch, daß die Vorder- oder Dekorseite der zu verformenden Folien bei diesem Verfahren eine erheblich niedrigere Temperatur aufweist als die der Rückseite, besteht die Gefahr, daß bei der späteren Verwendung des verformten Kunststoffelementes gerade auf der Vorderseite oder Oberfläche im Kraftfahrzeug durch alterungseinflüße, Licht und/oder Wärme die eingefrorenen Spannungen auf der Oberfläche zu Schädigungen und/oder Rissen führen können. Da gerade bei Kraftfahrzeugen erhebliche Temperaturunterschiede durch Sonneneinstrahlungen auftreten können, stellt die Gefahr der Schädigung der Oberfläche einen erheblicher Nachteil dar.

Aus diesem Grund wurde in der zum Zeitpunkt der Hinterlegung dieser Patentnameldung noch nicht veröffentlichten Patentanmeldung P 3714366.2 ein Negativtiefziehverfahren gewählt, bei dem die Vorder- oder Dekorseite geprägt, genarbt oder mit Dekorierungen versehen werden kann und die Gefahr der eingefrorenen Spannungen auf der Vorder- oder Dekorseite nicht bestehen oder erheblich verringert sind.

Aus der DE-U 8706204 ist bereits eine Vorrichtung zur Herstellung von Formteilen oder Gegenständen aus thermoverformbaren Kunststoffolien nach dem Tiefziehverfahren bekannt, die eine Negatitiefziehform mit einer Einspann- oder Vorspannvorrichtung für die Kunststoffolien besitzt. Dabei ist die Negativtiefziehform mit mindestens einer Zuleitung und/oder Vorrichtung zur Ausübung eines Druckunterschiedes ausgestattet.

Der Negativtiefziehform ist eine Auffangwanne oder ein Auffangbehälter sowie Düsen, Spritzen oder Spritzvorrichtungen zugeordnet, deren Öffnungen und/oder Düsenwinkel auf den zur Aufnahme der Kunststoffbahn bestimmten Formoberfläche der Negativtiefziehform gerichtet sind. Die Kunststoffolien weisen dabei in ihrer Oberschicht und Unterschicht keine unterschiedlichen Fließtemperaturen, Schmelzindices und dergleichen auf.

In der JP-A 60157838 ist eine Vorrichtung beschrieben, bei der eine im erweichten Zustand vorliegende Folie auf eine Hilfsfolie gelangt und nachfolgend in einer Tiefziehform verformt wird. Dabei werden jedoch keine mikroporösen Negativtiefziehformen verwendet und bestimmte Unterschiede der Schmelzindices zwischen Oberschicht und Unterschicht sind ebenfalls nicht vorhanden.

Aufgabe der vorliegenden Erfindung war es, ein verbessertes Verfahren und eine verbesserte Vorrichtung sowie eine für das Verfahren verbesserte Folienzusammensetzung zu finden. Die zur Verformung einzusetzenden Folien sollten zwischen Vorder- und Rückseite keine oder keine erheblichen Temperaturdifferenzen unmittelbar vor der Verformung aufweisen. Auf den verformten Gegenständen oder Teilen sollten auf den Sichtflächen Spannungen vermieden oder verringert werden. Das Verfahren und die Vorrichtung sollten optimiert werden.

Erfindungsgemäß wurde festgestellt, daß diesen Zielen und Aufgaben ein Verfahren zur Herstellung von Formteilen oder Gegenständen aus thermoverformbaren Kunststoffolien, thermoverformbaren kunststoffhaltigen Bahnen oder Kunststoffplatten nach dem Negativtiefziehverfahren gerecht wird, wobei diese auf eine Temperatur von 363 K bis 533 K aufgeheizt und unter Mitverwendung eines Druckunterschiedes und unter Erwärmung in die Negativtiefziehform (1) eingebracht und in der Negativtiefziehform verformt werden, und die Narbgebung und/oder Oberflächendekoration der Kunststoffolie oder -bahn durch eine mikroporöse, luftdurchlässige Formoberfläche aufweisen Negativtiefziehform erfolgt, wobei zwischen der kälteren Negativtiefziehform und der Kunststoffolie oder -bahn ein Temperaturunterschied von mehr als 30 K eingehalten wird.

Gemäß der Erfindung wird eine mindestens zweischichtige Kunststoffolie oder -bahn (5) mit einer Dicke von 150 μm bis 5000 μm mit einer der Negativtiefziehform (1) zugewandten Oberschicht oder Oberfolie, deren Fließtemperatur oder Fließtemperaturbereich, Kristallitschmelztemperatur oder -schmelzbereich um 3 bis 50 K niedriger ist als der der Unterschicht oder Unterfolie und/oder deren Schmelzindex (gemessen nach DIN 53735) MFI 170 °C/209 N/10 min 1/50 bis 3/5 des Schmelzindex MFI 170 °C/209 N/10 min der Oberschicht oder Oberfolie beträgt erhitzt und negativtiefziehgeformt.

Nach einer bevorzugten Ausführungsform des Verfahrens wird eine mindestens zweischichtige Kunststoffolie, -bahn oder -platte (5) mit einer Dicke von 400 bis 1500 μm mit einer der Negativtiefziehform zugewandten Oberschicht oder Oberfolie, deren Fließtemperatur oder Fließtemperaturbereich, Kristallitschmelztemperatur oder -schmelzbereich um 8 bis 40 K niedriger ist als der der Unterschicht oder Unterfolie und/oder bei der der Schmelzindex der Unterschicht oder Unterfolie (gemessen nach DIN 53735) (MFI 170 °C/209 N/10 min 1/20 bis 1/ des Schmelzindex MFI 170 °C/209 N/10 min der Oberschicht oder Oberfolie beträgt, erhitzt und negativtiefziehgeformt.

Nach einer weiteren bevorzugten Ausführungsform des Verfahrens wird die Temperatur des Negativtiefziehwerkzeuges oder der Negativtiefziehform (1) um mehr als 30 K, vorzugsweise um mehr als 80 K, unter der Fließtemperatur oder dem Fließtemperaturbereich oder der Kristallitschmelztemperatur oder dem Kristallitschmelzbereich der Kunststoffolie, -bahn oder -platte (5) eingestellt und die Kunststoffolie, -bahn oder -platte auf eine Temperatur von 363 K bis 533 K, vorzugsweise 413 K bis 493 K, aufgeheizt, wobei die Kunststoffolie, -bahn oder -platte (5) unmittelbar vor der Thermoverformung im Negativtiefziehwerkzeug auf einen für die Oberschicht oder Oberfolie und die Unterschicht oder Unterfolie gleichen oder annähernd gleichen Temperaturwert (Temperaturunterschied maximal 20 K, vorzugsweise bis maximal 7,5 K) eingestellt wird. Die Oberschicht oder Oberfolie weist bei diesem Temperaturwert gemäß der Erfindung einen geringeren Viskositätswert auf als der Viskositätswert der Unterschicht oder Unterfolie bei der Temperatureinstellung.

Nach einer weiteren Ausführungsform wird somit die Umform- oder Tiefziehtemperatur unmittelbar vor und/oder bei der Verformung so eingestellt, daß sie gleich oder höher der Fließtemperatur oder dem Fließtemperaturbereich und/oder der Kristallitschmelztemperatur oder dem Kristallitschmelztemperaturbereich der Oberschicht oder Oberfolie ist und gleichzeitig niedriger als die Fließtemperatur oder der Fließtemperaturbereich und/oder die Kristallitschmelztemperatur der Unterschicht oder Unterfolie ist.

Bevorzugt wird die Kunststoffolie, -bahn (5) oder -platte unmittelbar vor der Thermoverformung auf einen für die Oberschicht oder Oberfolie und die Unterschicht oder Unterfolie gleichen oder annähernd gleichen Temperaturwert so eingestellt, daß die Oberfolie oder Oberschicht bei dem gleichen oder annähernd gleichen Temperaturwert im Kristallitschmelztemperaturbereich oder bei der Kristallitschmelztemperatur und/oder bei der Fließtemperatur oder im Fließtemperaturbereich liegt, während die Unterschicht oder Unterfolie einen gegenüber der Oberschicht oder Oberfolie geringeren Schmelzindex aufweist.

Die Oberschicht oder Oberfolie und die Unterschicht oder Unterfolie enthalten nach einer anderen bevorzugten Ausführungsform einen amorphen Anteil im Thermoplasten oder bestehen aus einem amorphen Thermoplasten, wobei die Oberschicht oder Oberfolie bei der Temperatureinstellung unmittelbar vor der Verformung im Negativtiefziehwerkzeug, vorzugsweise im oder oberhalb des Fließtemperaturbereiches oder im thermoplastischen Bereich liegt, während die Unterschicht oder Unterfolie im Fließtemperaturbereich mit einem niedrigeren Schmelzindex bei dieser Temperatur liegt, vorzugsweise knapp unter dem Fließtemperaturbereich oder im thermoelastischen Bereich oder im oberen Viertel des thermoelastischen Bereiches liegt.

Die Oberschicht oder Oberfolie und die Unterschicht oder Unterfolie enthalten nach einer anderen bevorzugten Ausführungsform einen teilkristallinen Anteil an Thermoplasten, wobei die Temperatureinstellung für die Umformung im oder in der Nähe knapp unterhalb des Kristallitschmelzbereiches der Unterschicht oder Unterfolie liegt, während die Oberschicht oder Oberfolie im Kristallitschmelzbereich und/oder oberhalb des Kristallitschmelzbereiches mit einem höheren Schmelzindex als der der Unterschicht oder Unterfolie, vorzugsweise im thermoplastischen Bereich liegt. Nach einer weiteren Ausführungsform besteht die Oberschicht aus einem teilkristallinen Thermoplasten und die Unterschicht aus einem amorphen oder umgekehrt.

Die Verbundfolien (5) werden u.a. durch Extrusions-, Kalandrier- und/oder Laminierverfahren hergestellt; vorzugsweise werden sie coextrudiert.

Nach einer anderen bevorzugten Ausführungsform des erfindungsgemäßen Verfahrens wird anstelle einer thermoverformbaren Kunststoffolie oder einer thermoverformbaren kunststoffhaltigen Bahn ein mindestens zweischichtiges Kunststoffcoextrudat (5) in Form einer bahnförmigen Schmelze, die vorzugsweise ohne zusätzliche Heizung unter Ausnutzung der Wärmekapazität der Schmelzenbahn auf einen Rand oder Rahmen der porösen Negativtiefziehform (1) und/oder der Druck- oder Unterdruckkammer, in der die Negativtiefziehform (1) angeordnet ist, aufgebracht und unter gleichmäßiger oder nahezu gleichmäßiger Bewegung des Breitschlitzextruders und/oder der Negativtiefziehform in mindestens einer Richtung geführt, wobei das Coextrudat mindestens eine Negativtiefziehform (1) auf ihrer Formfläche bis einschließlich zum Rand oder Rahmen abdeckt. Danach wird die coextrudierte Bahn am Rand oder Rahmen abgedichtet und gehalten und unter Verwendung eines Druckunterschiedes, vorzugsweise unter Verwendung eines von der Negativtiefziehform aus angelegten Unterdruckes im Negativtiefziehverfahren verformt, wobei vorzugsweise während des Tiefziehvorganges die ausgestoßene Menge des Kunststoffcoextrudates diskontinuierlich oder intermittierend geführt, vorzugsweise auf Null eingestellt oder auf eine geringere Ausstoßmenge reduziert wird.

Nach einer anderen bevorzugten Ausführungsform des erfindungsgemäßen Verfahrens wird anstelle einer thermoverformbaren Kunststoffolie oder einer thermoverformbaren kunststoffhaltigen Bahn (5) ein mindestens zweischichtes Kunststoffextrudat (5) in Form einer bahnförmigen Schmelze verwendet, die vorzugsweise ohne zusätzliche Heizung unter Ausnutzung der Wärmekapazität der Schmelzenbahn von einer Transportvorrichtung, vorzugsweise einer Transportkette, einer Transportkammer, einem Transportband und/oder einer Greifvorrichtung, erfaßt und von dem Extruder beginnend über die Negativtiefziehform mit einer Geschwindigkeit in Abhängigkeit von der Ausstoßmenge und der Schmelzendicke geführt wird, so daß die Schmelzenbahn mindestens an den Rändern der Negativtiefziehform und/oder den Rändern oder Spannrahmen einer Druck- oder Unterdruckkammer, in der die Negativtiefziehform (1) angeordnet ist, aufliegt, von der Negativtiefziehformoberfläche in einem Abstand angeordnet ist und mit mindestens einem Abdichtrahmen oder oberen Teil des Spannrahmens abgedichtet wird, sowie unter Verwendung eines Druckunterschiedes, vorzugsweise unter Verwendung eines von der Negativtiefziehform (1) aus angelegten Unterdruckes, im Negativtiefziehverfahren verformt wird, wobei während des Tiefziehvorganges die ausgestoßene Menge des Kunststoffextrudates auf Null eingestellt oder auf eine geringere Ausstoßmenge reduziert wird.

Nach einer Ausführungsform innerhalb dieses Verfahrens wird die coextrudierte, durch einen Spann- oder Abdichtrahmen (6) oder ähnliche Abdichtvorrichtung im Rahmen abgedichtete und gehaltene Bahn (5) durch ein in der Negativtiefziehform (1) und/oder ein in der Druck- oder Unterdruckkammer, in der sich die Negativtiefziehform befindet, eingeschlossenes Luftpolster oder durch das über die Negativtiefziehform eingeblasene Stützgas, vorzugsweise durch Luft, gehalten, wobei die coextrudierte Bahn vorgewölbt, vorzugsweise zur Negativtiefziehform hin vorgewölbt, ist.

Nach einer weiteren Ausführungsform wird die coextrudierte, im Rahmen abgedichtete und gehaltene Bahn (5) zu der Negativtiefziehform (1) vorgewölbt und durch einen Positivstempel (7) vorgeformt, der ganz oder in Teilbereichen die Form der Negativtiefziehform (1) (in Positivform) aufweist.

Die Temperatur des Positivstempels (7) wird um mehr als 60 K, vorzugsweise um mehr als 100 K, unter dem der Fließtemperatur oder dem Fließtemperaturbereich oder der Kristallitschmelztemperatur oder dem Kristallitschmelztemperaturbereich der Kunststoffolie, -bahn (5) oder -platte eingestellt.

Die Erfindung betrifft weiterhin eine Vorrichtung für das Negativtiefziehverfahren, vorzugsweise eine Vorrichtung zur Ausübung des Verfahrens gemäß der Erfindung, bestehend aus einer Negativtiefziehform (1), die eine mikroporöse, luftdurchlässige Formoberfläche aufweist, die mit einer Kühlvorrichtung versehen ist. Gemäß der Erfindung ist der Negativtiefziehform (1) ein Extruder (4) mit einer Breitschlitzextruderdüse zugeordnet und der Extruder (4) und/oder die Negativtiefziehform sind in mindestens einer Richtung bewegbar und/oder schwenkbar angeordnet.

Nach einer bevorzugten Ausführungsform ist der Negativtiefziehform (1) ein Breitschlitzextruder (4) zugeordnet, an dessen Düsenöffnung eine Transportvorrichtung zur Führung und zum Transport der Schmelzenbahn angeordnet ist. Bevorzugt weist dabei die Breitschlitzextruderdüse eine Dickenverstellung über die Gesamtbreite der Düse auf, die mit einer Steuervorrichtung zur Dickenverstellung in Verbindung steht.

Nach einer weiteren bevorzugten Ausführungsform steht der Extruder (4) mit einer Steuervorrichtung zur kurzzeitigen Ein- oder Ausschaltung und/oder zur intermittierenden Ausstoßleistung oder zur Veränderung der Auspreßmenge in Verbindung. Der Stempel (7) weist nach einer Ausführungsform eine Temperiervorrichtung, vorzugsweise Kühlvorrichtung, zur Temperaturführung oder Temperatursteuerung auf.

Der beidseitig zur Folienbahnzuführung bzw. Folienbahn angeordneten Heizvorrichtung (Hauptheizvorrichtung) ist eine Vorheizvorrichtung vorgeordnet.

Nach einer weiteren bevorzugten Ausführungsform sind mehrere Negativtiefziehformen hintereinander, nebeneinander oder karusselartig angeordnet.

Nach dem erfindungsgemäßen Verfahren werden Verbundfolienbahnen, insbesondere zur Herstellung von Formteilen oder Gegenständen nach dem Negativtiefziehverfahren, mit einer Schichtdicke von 150 bis 5000 $\mu$m, vorzugsweise 400 bis 1500 $\mu$m, verarbeitet, wobei vorzugsweise die Oberschicht oder Oberfolie 100 bis 1000 $\mu$m, vorzugsweise 200 bis 600 $\mu$m, beträgt und wobei die Verbundfolienbahnen aus mindestens zwei unterschiedlich zusammengesetzten Schichten oder Folien bestehen. Dabei weist die Verbundfolienbahn eine durch die Negativtiefziehform zu prägende, zu dekorierende oder umzuformende Oberschicht oder Oberfolie auf, deren Fließtemperatur oder Fließtemperaturbereich, Kristallitschmelztemperatur oder -schmelzbereich um 3 bis 50 K niedriger ist als der der Unterschicht oder Unterfolie und/oder bei der der Schmelzindex der Unterschicht oder Unterfolie (gemessen nach DIN 53735) MFI 170 °C/209 N/10 min 1/50 bis 3/5 des Schmelzindex MFI 170 °C/209 N/10 min der Oberschicht oder Oberfolie beträgt.

Nach einer weiteren bevorzugten Ausführungsform bestehen sowohl die Oberschicht oder Oberfolie als auch die Unterschicht oder Unterfolie aus einem Kunststoffgemisch oder einer Kunststofflegierung, die die gleichen Kunststoffe, jedoch in unterschiedlichen Gewichtskonzentrationen, bezogen auf die einzelnen Schichten oder Folien, enthalten.

Nach einer bevorzugten Ausführungsform enthalten die Kunststoffmischung oder -legierung der Oberschicht oder Oberfolie und Unterschicht oder Unterfolie ein Polyolefin, vorzugsweise ein Propylenhomo-, -co-, -block- oder -pfropfpolymerisat oder ein Polyethylen hoher Dichte (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höheren Schmelzindex (Weichphase) oder bestehen daraus, wobei der Thermoplast oder das thermoplastische Elastomere als mindestens eine Komponente eine Legierung, ein Co-, Pfropf -, Block- oder Terpolymerisat von oder mit einem Acrylnitril, Dien, Butadien, Ethylenbutylen und/oder Styrol, vorzugsweise Ethylen-Butylen-Styrol-Triblockpolymerisat (SEBS) und/oder anderer Styrolblockpolymere, Ethylen-Propylen-Dien-Pfropf- oder -Copolymerisat (EPDM) vernetzten oder teilvernetzten Naturkautschuk (NR), vernetzten oder teilvernetzten Nitril-Butadien-Kautschuk (NBR) und/oder Ethylen-Propylen-Co- oder Pfropfpolymerisat (EPM) enthält, wobei der Gewichtsanteil (bezogen auf 100 Gew.-%) des Kunststoffes der jeweiligen Schicht oder Folie) des Polyolefins, vorzugsweise Propylen-, -co-, -block- oder -pfropfpolymerisates in der Unterfolie oder Unterschicht um mehr als 3 Gew.-%, vorzugsweise um mehr als 10 Gew.-%, höher ist als in der Oberschicht oder Oberfolie und/oder der Gewichtsanteil (bezogen auf 100 Gew.-% des Kunststoffes in der jeweiligen Folie oder Schicht) des weiteren Thermoplasten oder thermoplastischen Elastomeren in der Unterfolie oder Unterschicht um mehr als 3 Gew.-%, vorzugsweise um mehr als 7 Gew.-%, niedriger ist als in der Oberschicht oder Oberfolie.

Nach einer anderen Ausführungsform enthalten die Kunststoffmischung oder Legierung der Oberschicht oder Oberfolie und Unterschicht oder Unterfolie ein Polystyrol (PS), Polyamid (PA), Styrol-Acrylnitril-Co- oder -Pfropfpolymerisat (SAN), Acrylnitril-Butadien-Styrol-Co- oder -Pfropfpolymerisat (ABS) und/oder Acrylsäureester-Styrol-Acrylnitril-Co- oder -Pfropfpolymerisat (ASA) (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höherem Schmelzindex (Weichphase) oder bestehen daraus, wobei der Thermoplast oder das thermoplastische Elastomer als mindestens eine Komponente eine Legierung, ein Co-, Pfropf-, Block- oder Terpolymerisat mindestens einer der folgenden Verbindungen: Alken oder Alkenyl ($C_1$ -$C_4$) -Alkyl ($C_1$ -$C_8$) -Acrylat-Kohlenmonoxid--Terpolymerisat, Alken oder Alkenyl ($C_1$ -$C_4$) -Alkyl ($C_1$ -$C_8$) -Methacrylat-Kohlenmonoxid-Terpolymerisat, Alken oder Alkenyl ($C_1$ -$C_4$) -Alkyl ($C_1$ -$C_8$) -Acrylat-Copolymerisat, Alken oder Alkenyl ($C_1$ -$C_4$) -Alkyl ($C_1$ -$C_8$) -Methacrylat-Copolymerisat, mit einem Alkyl--Acrylat-Gehalt oder Alkyl-Methacrylat-Gehalt von mehr als 12 Gew.-% (berechnet auf das jeweilige polare Gruppen enthaltende Plastifiziermittel mit 100 Gew.-Teilen) und mit statistisch verteilten Acrylat- oder Methacrylatgruppen bzw. Alkylacrylat-oder Alkylmethacrylatgruppen, vorzugweise Ethylen-Butyl-Acrylat-Kohlenmonoxid-Terpolymerisat, Ethylen-Hexylacrylat-Kohlenmonoxid-Terpolymerisat, Ethylen-Butyl-Acrylat-Copolymerisat, Ethylen-Hexylacrylat-Copolymerisat, Ethylen-Vinylacetat-Copolymerisat und/oder Ethylen-Vinylacetat-Kohlenmonoxid-Terpolymerisat und/oder Ethylen-Propylen-Dien-Co- oder -pfropfpolymerisat (EPDM), Ethylen-Propylen-Co- oder pfropfpolymerisat (EPM), vernetzter oder teilvernetzter Naturkautschuk (NR), vernetzter und/oder teilvernetzter Nitril-Butadien-Kautschuk (NBR) und/oder thermoplastisches Polyurethan oder thermoplastischen Polyetherester enthält oder daraus besteht, wobei der Gewichtsanteil (bezogen auf 100 Gew.-% der Kunststoffe der jeweiligen Schicht oder Folie) der Kunststoffe der Hartphase einschließlich des Acrylnitril-Butadien-Styrol-Co- oder -pfropfpolymerisates (ABS) in der Unterfolie oder Unterschicht um mehr als 3 Gew.-%, vorzugsweise um mehr als 7 Gew.-%, höher ist als in der Oberschicht oder Oberfolie und/oder der Gewichtsanteil (bezogen auf 100 Gew.-% des Kunststoffes in der jeweiligen Folie oder Schicht) des weiteren Thermoplasten oder thermoplastischen Elastomeren in der Unterfolie oder Unterschicht um mehr als 3 Gew.-%, vorzugsweise um mehr als 7 Gew.-%, niedriger ist als in der Oberschicht oder Oberfolie.

Nach einer weiteren Ausführungsform der verwendeten Verbundfolienbahn für das Negativtiefziehverfahren enthält die Kunststoffmischung oder -legierung der Oberschicht oder Oberfolie und Unterschicht oder Unterfolie ein Polyurethan und/oder Polyetherester oder besteht daraus, wobei das Polyurethan und/oder der Polyetherester der Oberfolie oder Oberschicht eine Shore D Härte von 25 bis 50 aufweist oder durch Modifiziermittel darauf eingestellt ist und das Polyurethan und/oder der Polyetherester der Unterfolie oder Unterschicht eine Shore D-Härte von 35 bis 70 aufweist und um mindestens 5, vorzugsweise 10, Shore D-Härtegrade höher liegt als die Shore D-Härte der Oberfolie oder Oberschicht oder durch ein Modifiziermittel oder Modifiziermittelgemisch darauf eingestellt ist.

Nach einer anderen Ausführungsform bestehen sowohl die Oberschicht oder Oberfolie als auch die Unterschicht oder Unterfolie aus mindestens einem, vorzugsweise mindestens zwei verschiedenen Kunststoffen und weisen qualitativ und quantitativ unterschiedliche Zusammensetzungen auf.

Die nach dem Negativtiefziehverfahren hergestellten Verbundfolienbahnen, die vorzugsweise eine Schaumschicht an der Unterschicht oder Unterfolie aufweisen und/oder mit einem Träger versehen sind, werden für Kraftfahrzeuginnenverkleidungen und Kraftfahrzeugteile, vorzugsweise für Schalttafeln, Konsolen, Seitenwände, Türpfosten und/oder Säulenverkleidungen verwendet.

**Beispiele:**

1. **Beispiel für Zusammensetzung der Oberfolie**

   | | |
   |---|---|
   | Suspensions-Polyvinylchlorid K-Wert 70 | 100,0 Gew.-Teile |
   | Phthalat-Weichmacher | 55,0 Gew.-Teile |
   | Adipinsäureester-Weichmacher | 20,0 Gew.-Teile |
   | Stabilisator | 2,0 Gew.-Teile |
   | Füllstoff | 6,0 Gew.-Teile |
   | Schwerentflammbarkeitsmittel | 10,0 Gew.-Teile |
   | Antioxidans | 1,5 Gew.-Teile |

   MFI (Schmelzindex) 209 N Belastung/10 min DIN 53735

   | 150 °C | 160 °C | 170 °C | 180 °C |
   |---|---|---|---|
   | 14, 1 | 60,8 | 222,0 | 250,0 |

   Shore-D-Härte: 25

2. **Beispiel für Zusammensetzung der Unterfolie**

   | | |
   |---|---|
   | Suspensions-Polyvinylchlorid K-Wert 70 | 40,0 Gew.-Teile |
   | Acrylnitril-Butadien-Styrol-Copolymerisat | 40,0 Gew.-Teile |
   | Acrylnitril-Copolymerisat | 20,0 Gew.-Teile |
   | Olefinisches Terpolymerisat mit statistisch verteilten Acetat- und Kohlenmonoxidgruppen | 20,0 Gew.-Teile |
   | Phthalat-Weichmacher | 22,0 Gew.-Teile |
   | Aliphatischer oder aromatischer Polycarbonsäureester | 5,0 Gew.-Teile |
   | Antioxidans | 1,0 Gew.-Teile |
   | Stabilisator | 6,0 Gew.-Teile |
   | Schwerentflammbarkeitsmittel | 3,0 Gew.-Teile |

   MFI (Schmelzindex) 209 N Belastung/10 min DIN 53735

   | 150 °C | 160 °C | 170 °C | 180 °C |
   |---|---|---|---|
   | 4,8 | 14,3 | 22,0 | 55,9 |

   Shore-D-Härte: 31

### 3. Beispiel für Zusammensetzung der Oberfolie

| | |
|---|---|
| Elastomerlegierung EPDM PP (Kelprox 085 A) | 80,0 Gew.-Teile |
| Alterungsschutzmittel | 0,2 Gew.-Teile |
| LLDPE | 20,0 Gew.-Teile |
| (lineares Polyethylen niedriger Dichte) | |

MFI (Schmelzindex) 209 N Belastung/10 min DIN 53735

| 160 °C | 170 °C | 180 °C |
|---|---|---|
| 0 | 115 | 233 |

Shore-D-Härte: 25

### 4. Beispiel für Zusammensetzung der Unterfolie

| | |
|---|---|
| Elastomerlegierung EPDM/PP | 80,0 Gew.-Teile |
| Alterungsschutzmittel | 0,2 Gew.-Teile |
| LLDPE (lineares Polyethylen niedriger Dichte) | 20,0 Gew.-Teile |

MFI (Schmelzindex) 209 N Belastung/10 min DIN 53735

| 160 °C | 170 °C | 180 °C | 190 °C |
|---|---|---|---|
| 0,2 | 35 | 70 | 80 |

Shore-D-Härte: 30

Bevorzugt werden jeweils 1 und 2 bzw. 3 und 4 in der Verbundfolie kombiniert.

Bei den Beispielen 1 bis 4 ergeben sich in Abhängigkeit von der Temperatur somit folgende MFI-Werte:

| | 160 °C | 170 °C | 180 °C | 190 °C |
|---|---|---|---|---|
| Beispiel 1 | 60,8 | 222,0 | 250,0 | - |
| Beispiel 2 | 14,3 | 22,0 | 55,9 | - |
| Beispiel 3 | 0 | 115,0 | 233,0 | - |
| Beispiel 4 | 0,2 | 35,0 | 70,0 | 80,0 |

### Zeichnungsbeschreibung

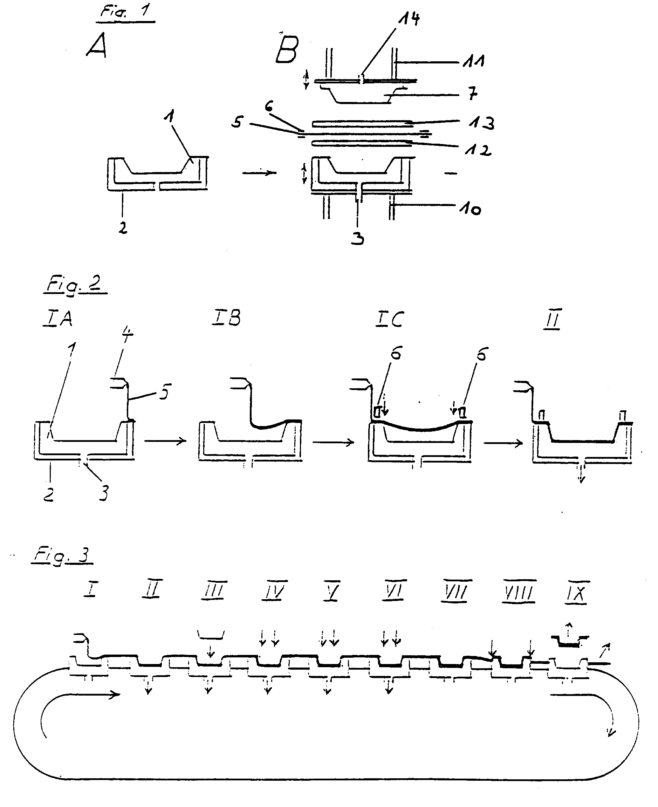

In den beigefügten Figuren 1 bis 4 sind das erfindungsgemäße Verfahren und die erfindungsgemäße Vorrichtung oder die Vorrichtungskombinationen schematisch dargestellt.

In der Figur 1 ist in den Abbildungen A und B die Negativtiefziehform 1 schematisch dargestellt, die in einer Haltevorrichtung (2) für die Negativtiefziehform angeordnet ist. Die Negativtiefziehform ist mit einem Vakuum und/oder einem Druckluftanschluß (3) versehen. Die erfindungsgemäße zweischichtige Kunststoffolienbahn (5) wird unter Verwendung von mindestens zwei Heizvorrichtungen (12, 13) auf eine gleiche oder annähernd gleiche Temperatur vor der Verformung (bezogen auf die Ober- und Unterseite der Folie) aufgeheizt, vom Spannrahmen (6) gehalten, die Heizvorrichtung zurückgefahren und die Folienbahn auf der Haltevorrichtung (2) und/oder auf dem Rand der Negativtiefziehform und/oder am Rand einer Druck- oder Unterdruckkammer abgedichtet. Unter Mitverwendung eines Positivstempels (7) wird bevorzugt die Kunststoffolienbahn (5) vorgeformt und unter Verwendung von einem von der Negativtiefziehform ausgeübten Unterdruck in diese eingebracht und thermoverformt. Die Führungen 10 und 11 sind bewegbar angeordnet und dienen zur Führung des Stempels (7) oder des Obertisches (Führung 11) und zur Führung der Negativtiefziehform (1) oder des Untertisches (Führung 10). Nach einer Ausführungsform ist an dem Stempel (7) ein Anschluß (14) für die Anlegung eines Druckes oder Unterdruckes angeordnet.

In der Figur 2 wird anstelle der zweischichtigen Kunststoffbahn eine aus einem Extruder (4) austretende coextrudierte Schmelzenbahn (5) verwendet, wobei die Schmelzebahn ebenfalls gleiche oder annähernd gleiche Temperaturen auf der Ober- und Unterschicht aufweist und ohne zusätzliche Heizvorrichtung unter Ausnutzung der Wärmekapazität der Schmelzenbahn auf den Rand der Negativtiefziehform (1) aufgebracht wird (Figur 2, I A).

Durch Bewegung der Negativtiefziehform wird die Schmelzenbahn über die Negativtiefziehform gebracht (Figur 2, I B) und mittels des Rahmens (6) abgedichtet (vergleiche Figur 2, I C). Nach Abdichtung wird ein Unterdruck an die Negativtiefziehform angelegt (vergleiche Figur 2, II) und negativtiefgezogen.

In Figur 3 ist ein kontinuierliches Verfahren in Form einer ketten- oder karusselartigen Anordnung dargestellt. Die Arbeitsstufen I und II sind aus der Figur 2 ersichtlich. Gemäß Arbeitsstufe III wird ein Träger eingebracht und in Arbeitsstufe IV mit einem Schaumreaktionsgemisch versehen und nachträglich der an die Form angebrachte Schaumformdeckel geschlossen. Die Arbeitsgänge V und VI dienen der Ausschäumung oder Reaktion des Schaumreaktionsgemisches. In der Arbeitsstufe VII erfolgt die Öffnung des Schaumformdeckels. Die hinterschäumte Kunststoffolienbahn wird an ihren Rändern bei der Arbeitsstufe VIII abgestanzt und das hinterschäumte Formteil entnommen (Arbeitsstufe IX).

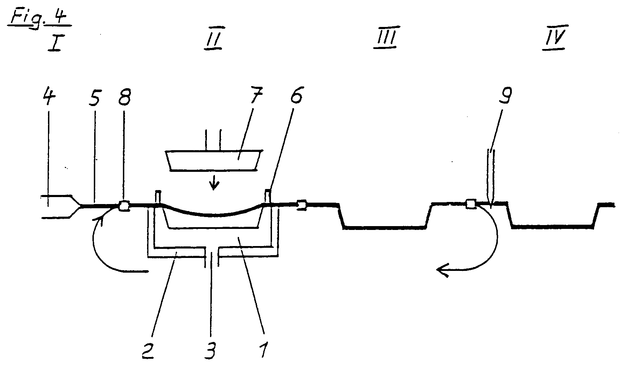

In Figur 4 ist eine weitere bevorzugte Ausführungsform und Vorrichtung des erfindungsgemäßen Verfahrens und der erfindungsgemäßen Vorrichtungskombination schematisch dargestellt. Die aus dem Extruder 4 austretende Schmelzenbahn wird durch eine Transportvorrichtung, vorzugsweise Transportkette (8) zu der Negativtiefziehform (1) und/oder der Druck- und/oder Unterdruckkammer, in der die Negativtiefziehform (1) angeordnet ist, geführt.

Die coextrudierte Schmelzenbahn wird am Rahmen der Druck- oder Unterdruckkammer 15 und/oder am Rahmen der Negativtiefziehform unter Verwendung eines zusätzlichen oberen Rahmens 6 abgedichtet und gehalten, unter Mitverwendung des Stempels 7 vorgeformt und unter Unterdruck der Formoberfläche der Negativtiefziehform angepaßt.

Die Transportvorrichtung, vorzugsweise die Transportkette (8) wird über die Druck- oder Unterdruckkammer (15) und die darin befindliche Negativtiefziehform (1) geführt oder ist nach einer anderen Ausführungsform seitlich von der Druck- oder Unterdruckkammer bzw. der Negativtiefziehform angeordnet und wird seitlich zurückgeführt. Vor, bei oder nach Ausbringung des verformten Teiles wird unter Verwendung einer Stanzvorrichtung oder eines Messers das geformte Teil gestanzt oder abgeschnitten (Stanz- oder Schneidevorrichtung 9).

**Patentansprüche**

1. Verfahren zur Herstellung von Formteilen oder Gegenständen aus thermoverformbaren Kunststoffolien oder -bahnen nach dem Negativtiefziehverfahren, wobei diese auf eine Temperatur von 363 K bis 533 K aufgeheizt und unter Mitverwendung eines Druckunterschiedes und unter Erwärmung in die Negativtiefziehform (1) eingebracht und in der Negativtiefziehform verformt werden, und die Narbgebung und/oder Oberflächendekoration der Kunststoffolie oder -bahn durch eine mikroporöse luftdurchlässige Formoberfläche aufweisende Negativtiefziehform erfolgt, wobei zwischen der kälteren Negativtiefziehform und der Kunststoffolie oder -bahn ein Temperaturunterschied von mehr als 30 K eingehalten wird, dadurch gekennzeichnet, daß eine mindestens zweischichtige Kunststoffolie oder -bahn (5) mit einer Dicke von 150 $\mu$m bis 5.000 $\mu$m mit einer der Negativtiefziehform (1) zugewandten Oberschicht oder Oberfolie, deren Fließtemperatur, Fließtemperaturbereich oder Kristallitschmelztemperatur um 3 bis 50 K niedriger ist als die bzw. der der Unterschicht oder Unterfolie und/oder deren Schmelzindex (gemessen nach DIN 53735) MFI 170 °C/209 N/min 1/50 bis 3/5 des Schmelzindex MFI 170 °C/209 N/10 min der Oberschicht oder Oberfolie beträgt, erhitzt und negativtiefziehgeformt wird.

2. Verfahren nach Anspruch 1, dadurch gekennzeichnet, daß eine mindestens zweischichtige Kunststoffolie oder -bahn (5) mit einer Dicke von 400 bis 1500 $\mu$m mit einer der Negativtiefziehform (1) zugewandten Oberschicht oder Oberfolie, deren Fließtemperatur, Fließtemperaturbereich oder Kristallitschmelztemperatur um 8 bis 40 K niedriger ist als die bzw. der der Unterschicht oder Unterfolie und/oder deren Schmelzindex (gemessen nach DIN 53735) MFI 170 °C/209 N/min 1/20 bis 1/2 des Schmelzindes MFI 170 °C/209 N/10 min der Oberschicht oder Oberfolie beträgt, erhitzt und negativtiefziehgeformt wird.

3. Verfahren nach Ansprüchen 1 und 2, dadurch gekennzeichnet, daß die Temperatur des Negativtiefziehwerkzeuges oder Negativtiefziehform (1)

um mehr als 80 K,

unter der Fließtemperatur oder dem Fließtemperaturbereich oder Kristallitschmelztemperatur der Kunststoffolie oder -bahn (5) eingestellt und diese auf eine Temperatur von

413 K bis 493 K,

aufgeheizt wird, daß die Kunststoffolie oder -bahn (5) unmittelbar vor der Thermoverformung im Negativtiefziehwerkzeug auf einen für die Oberschicht oder Oberfolie und die Unterschicht oder Unterfolie gleichen oder annähernd gleichen Temperaturwert (Temperaturunterschied maximal 20 K, vorzugsweise bis maximal 7,5 K) eingestellt wird, wobei die Oberschicht oder Oberfolie bei diesem Temperaturwert einen höheren Schmelzindex aufweist als der Schmelzindex der Unterschicht oder Unterfolie bei dieser Temperatureinstellung.

4. Verfahren nach einem oder mehreren der Ansprüche 1 bis 3, dadurch gekennzeichnet, daß die Umform- oder Tiefziehtemperatur unmittelbar vor und/oder bei der Verformung so eingestellt wird, daß sie gleich oder höher der Fließtemperatur, dem Fließtemperaturbereich und/oder der Kristallitschmelztemperatur der Oberschicht oder Oberfolie ist und gleichzeitig niedriger als die Fließtemperatur, der Fließtemperaturbereich und/oder die Kristallitschmelztemperatur der Unterschicht oder Unterfolie ist.

5. Verfahren nach einem oder mehreren der Ansprüche 1 bis 4, dadurch gekennzeichnet, daß die Oberschicht oder Oberfolie und die Unterschicht oder Unterfolie einen amorphen Anteil im Thermoplasten enthalten, wobei die Oberschicht oder Oberfolie bei der Temperatureinstellung unmittelbar vor der Verformung im Negativtiefziehwerkzeug, vorzugsweise im oder oberhalb des Fließtemperaturbereiches oder im thermoplastischen Bereich liegt, während die Unterschicht oder Unterfolie im Fließtemperaturbereich mit einem niedrigeren Schmelzindex bei dieser Temperatur liegt, vorzugsweise knapp unter dem Fließtemperaturbereich im thermoelastischen Bereich oder im oberen Viertel des thermoelastischen Bereiches liegt.

6. Verfahren nach einem oder mehreren der Ansprüche 1 bis 5, dadurch gekennzeichnet, daß die Oberschicht oder Oberfolie und die Unterschicht oder Unterfolie einen teilkristallinen Anteil im Thermoplasten enthalten, wobei die Temperatureinstellung für die Umformung im oder in der Nähe knapp unterhalb des Kristallitschmelzbereiches der Unterschicht oder Unterfolie liegt, während die Oberschicht oder Oberfolie im Kristallitschmelzbereich oder oberhalb des Kristallitschmelzbereiches mit einem höheren Schmelzindex als der der Unterschicht oder Unterfolie liegt, vorzugsweise im thermoplastischen Bereich liegt.

7. Verfahren nach einem oder mehreren der Ansprüche 1 bis 6, dadurch gekennzeichnet, daß die Verbundfolien durch Extrusions-, Kalandrier- und/oder Laminierverfahren hergestellt werden, vorzugsweise coextrudiert werden, wobei vorzugsweise sowohl die Oberschicht oder Oberfolie als auch die Unterschicht oder Unterfolie aus einem Kunststoffgemisch oder einer Kunststofflegierung bestehen, die die gleichen Kunststoffe, jedoch in unterschiedlichen Gewichtskonzentrationen, bezogen auf die einzelnen Schichten oder Folien, enthalten oder sowohl die Oberschicht oder Oberfolie als auch die Unterschicht oder Unterfolie aus mindestens zwei verschiedenen Kunststoffen bestehen und qualitativ und quantitativ unterschiedliche Zusammensetzungen aufweisen.

8. Verfahren nach einem oder mehreren der Ansprüche 1 bis 7, dadurch gekennzeichnet, daß anstelle einer thermoverformbaren Kunststoffolie oder einer thermoverformbaren kunststoffhaltigen Bahn (5) ein mindestens zweischichtiges Kunststoffcoextrudat in Form einer bahnförmigen Schmelze, die vorzugsweise ohne zusätzliche Heizung unter Ausnutzung der Wärmekapazität der Schmelzenbahn auf einen Rand oder Rahmen der porösen Negativtiefziehform (1) und/oder der Druck- oder Unterdruckkammer, in der die Negativtiefziehform (1) angeordnet ist, aufgebracht und unter gleichmäßiger oder nahezu gleichmäßiger Bewegung des Breitschlitzextruders (4) und/oder der Negativtiefziehform (1) in mindestens einer Richtung geführt, wobei das Coextrudat mindestens eine Negativtiefziehform auf der Formfläche bis einschließlich zum Rand oder Rahmen abdeckt, die coextrudierte Bahn am Rand oder Rahmen abgedichtet und gehalten wird und unter Verwendung eines Druckunterschiedes, vorzugsweise

10

unter Verwendung eines von der Negativtiefziehform aus angelegten Unterdruckes im Negativtiefziehverfahren verformt wird, wobei vorzugsweise während des Tiefziehvorganges die ausgestoßene Menge des Kunststoffcoextrudates diskontinuierlich oder intermittierend geführt, vorzugsweise auf Null eingestellt oder auf eine geringere Ausstoßmenge reduziert wird.

9. Verfahren nach einem oder mehreren der Ansprüche 1 bis 7, dadurch gekennzeichnet, daß anstelle einer thermoverformbaren Kunststoffolie oder einer thermoverformbaren kunststoffhaltigen Bahn (5) ein mindestens zweischichtiges Kunststoffextrudat in Form einer bahnförmigen Schmelze verwendet wird, die vorzugsweise ohne zusätzliche Heizung unter Ausnutzung der Wärmekapazität der Schmelzenbahn von einer Transportvorrichtung, vorzugsweise einer Transportkette (8), einer Transportklammer, einem Transportband und/oder einer Greifvorrichtung, erfaßt und von dem Extruder beginnend über die Negativtiefziehform (1) mit einer Geschwindigkeit in Abhängigkeit von der Ausstoßmenge und der Schmelzendicke geführt wird, so daß die Schmelzbahn mindestens an den Rändern der Negativtiefziehform und/oder den Rändern oder Spannrahmen einer Druck- oder Unterdruckkammer, in der die Negativtiefziehform (1) angeordnet ist, aufliegt, von der Negativtiefziehformfläche in einem Abstand angeordnet ist und mit mindestens einem Abdichtrahmen oder oberen Teil des Spannrahmens (6) abgedichtet wird, sowie unter Verwendung eines Druckunterschiedes, vorzugsweise unter Verwendung eines von der Negativtiefziehform aus angelegten Unterdruckes, im Negativtiefziehverfahren verformt wird, wobei während des Tiefziehvorganges die ausgestoßene Menge des Kunststoffextrudates auf Null eingestellt oder auf eine geringere Ausstoßmenge reduziert wird.

10. Verfahren nach Ansprüchen 8 und 9, dadurch gekennzeichnet, daß die coextrudierte, durch einen Spann- oder Abdichtrahmen (6) oder ähnliche Abdichtvorrichtung im Rahmen abgedichtete und gehaltene Bahn durch ein in der Negativtiefziehform und/oder ein in der Druck- oder Unterdruckkammer, in der sich die Negativtiefziehform (1) befindet, eingeschlossenes Luftpolster oder durch das über die Negativtiefziehform eingeblasene Stützgas, vorzugsweise durch Luft, gehalten wird, wobei die coextrudierte Bahn (5) vorzugsweise zur Negativtiefziehform (1) hin vorgewölbt ist.

11. Verfahren nach einem oder mehreren der Ansprüche 8 und 10, dadurch gekennzeichnet, daß die coextrudierte, im Rahmen abgedichtete und gehaltene Bahn (5) zu der Negativtiefziehform vorgewölbt ist und durch einen Positivstempel (7) vorgeformt wird, der ganz oder in Teilbereichen die Form der Negativtiefziehform (1) (in Positivform) aufweist.

12. Verfahren nach einem oder mehreren der Ansprüche 1 bis 11, dadurch gekennzeichnet, daß die Temperatur des Stempels (7)

um mehr als 60 K, vorzugsweise

um mehr als 100 K,

unter dem der Fließtemperatur, dem Fließtemperaturbereich oder der Kristallitschmelztemperatur der Kunststoffolie oder -bahn eingestellt wird.

13. Verfahren nach einem oder mehreren der Ansprüche 1 bis 12, dadurch gekennzeichnet, daß für die Kunststoffmischung oder -legierung der Oberschicht oder Oberfolie und Unterschicht oder Unterfolie ein Polyolefin, vorzugsweise ein Propylenhomo-, -co-, -block- oder -pfropfpolymerisat (Hartphase) und mindestens ein weiterer Thermoplast oder ein thermoplastisches Elastomer mit einer niedrigeren Fließtemperatur, niedrigerem Fließtemperaturbereich oder Kristallitschmelztemperaturbereich oder einem höheren Schmelzindex (Weichphase) verwendet werden, wobei der Thermoplast oder das thermoplastische Elastomer als mindestens eine Komponente eine Legierung, ein Co-, Pfropf-, Block- oder Terpolymerisat von oder mit einem Acrylnitril, Dien, Butadien, Ethylenbutylen und/oder Styrol, vorzugsweise Ethylen-Butylen-Styrol-Triblockpolymerisat (SEBS) und/oder andere Styrolblockpolymere, Ethylen-Profpylen-Dien-Pfropf- oder Copolymerisat (EPDM), vernetzten oder teilvernetzten Naturkautschuk (NR), vernetzten oder teilvernetzten Nitil-Butadien-Kautschuk (NBR) und/oder Ethylen-Propylen-Co- oder Pfropfpolymerisat (EPM) enthält, wobei der Gewichtsanteil (bezogen auf 100 Gew.-% des Kunststoffes der jeweiligen Schicht oder Folie) des Polyolefins, vorzugsweise Propylenhomo-, -co-, -block- oder -pfropfpolymerisates in der Unterfolie oder Unterschicht

um mehr als 3 Gew.-%, vorzugsweise

um mehr als 10 Gew.-%,

höher ist als in der Oberschicht oder Oberfolie und/oder der Gewichtsanteil (bezogen auf 100 Gew.-% des Kunststoffes in der jeweiligen Folie oder Schicht) des weiteren Thermoplasten oder thermoplastischen Elastomeren in der Unterfolie oder Unterschicht
um mehr als 3 Gew.-%, vorzugsweise
um mehr als 10 Gew.-%,
niedriger ist als in der Oberschicht oder Oberfolie.

14. Verfahren nach einem oder mehreren der Ansprüche 1 bis 12, dadurch gekennzeichnet, daß als Kunststoffmischung oder -legierung der Oberschicht oder Oberfolie und Unterschicht oder Unterfolie solche verwendet werden, die ein Polystyrol (PS), Polyamid (PA), Styrol-Acrylnitril-Co- oder -Pfropfpolymerisat (SAN) Acrylnitril-Butadien-Styrol-Co- oder -Pfropfpolymerisat (ABS) und/oder Acrylsäureester-Styrol-Acrylnitril-Co- oder -Pfropfpolymerisat (ASA) (Hartphase) und mindestens einen weiteren Thermoplasten oder ein thermoplastisches Elastomer mit einer niedrigeren Fließtemperatur oder niedrigerem Fließtemperaturbereich, Kristallitschmelztemperatur oder Kristallitschmelztemperaturbereich oder einem höheren Schmelzindex (Weichphase) enthalten oder daraus bestehen, wobei der Thermoplast oder das thermoplastische Elastomere als mindestens eine Komponente eine Legierung, ein Co-, Pfropf-, Block- oder Terpolymerisat mindestens einer der folgenden Verbindungen: Alken oder Alkenyl $(C_1 - C_4)$ - Alkyl $(C_1 - C_8)$-Acrylat-Kohlenmonoxid-Terpolymerisat, Alken oder Alkenyl $(C_1 - C_4)$-Alkyl $(C_1 - C_8)$-Methacrylat-Kohlenmonoxid-Terpolymerisat, Alken oder Alkenyl $(C_1 - C_4)$-Alkyl $(C_1 - C_8)$-Acrylat-Copolymerisat, Alken oder Alkenyl $(C_1 - C_4)$-Alkyl $(C_1 - C_8)$-Methacrylat-Copolymerisat mit einem Alkyl -Acrylat-Gehalt oder Alkyl -Methacrylat-Gehalt von mehr als 12 Gew.-% (berechnet auf das jeweilige polare Gruppen enthaltende Plastifiziermittel mit 100 Gew.-Teilen) und mit statistisch verteilten Acrylat- oder Methacrylatgruppen bzw. Alkylacrylat- oder Alkylmethacrylatgruppen, vorzugsweise Ethylen-Butylacrylat-Kohlenmonoxid-Terpolymerisat, Ethylen-Hexylacrylat-Kohlenmonoxid-Terpolymerisat, Ethylen-Butylacrylat-Copolymerisat, Ethylen-Hexyl-Acrylat-Copolymerisat, Ethylen-Vinyl-Acetat-Copolymerisat und/oder Ethylen-Vinylacetat-Kohlenmonoxid-Terpolymerisat und/oder Ethylen-Propylen-Dien-Co- oder -pfropfpolymerisat (EPDM), Ethylen-Propylen-Co- oder -pfropfpolymerisat (EPM), vernetzter oder teilvernetzter Naturkautschuk (NR), vernetzter und/oder teilvernetzter Nitril-Butadien-Kautschuk (NBR) und/oder thermoplastisches Polyurethan oder thermoplastischen Polyetherester enthält oder daraus besteht, wobei der Gewichtsanteil (bezogen auf 100 Gew.-% des Kunststoffes der jeweiligen Schicht oder Folie) der Kunststoffe der Hartphase einschließlich des Acrylnitril-Butadien-Styrol-Co- oder -pfropfpoymerisates (ABS) inder Unterfolie oder Unterschicht
um mehr als 3 Gew.-%, vorzugsweise
um mehr als 7 Gew.-%,
höher ist als in der Oberschicht oder Oberfolie und/oder der Gewichtsanteil (bezogen auf 100 Gew.-% des Kunststoffes in der jeweiligen Folie oder Schicht) des weiteren Thermoplasten oder thermoplastischen Elastomeren in der Unterfolie oder Unterschicht
um mehr als 3 Gew.-%, vorzugsweise
um mehr als 7 Gew.-%,
niedriger ist als in der Oberschicht oder Oberfolie.

15. Vorrichtung bestehend aus einem Extruder und einer Negativtiefziehform (1), die eine mikroporöse luftdruchlässige Formoberfläche ausweist, die mit einer Kühlvorrichtung verbunden ist, dadurch gekennzeichnet, daß der Negativtiefziehform (1) ein Extruder (4) mit einer Breitschlitzextruderdüsezugeordnet ist und der Extruder (4) und/oder die Negativtiefziehform in mindestens einer Richtung bewegbar und/oder schwenkbar angeordnet sind.

16. Vorrichtung nach Anspruch 15, dadurch gekennzeichnet, daß der Negativtiefziehform (1) ein Breitschlitzextruder (4) zugeordnet ist, an dessen Düsenöffnung eine Transportvorrichtung zur Führung und zum Transport der Schmelzenbahn angeordnet ist.

17. Vorrichtung nach einem der Ansprüche 15 oder 16, dadurch gekennzeichnet, daß die Breitschlitzextruderdüse eine Dickenverstellung über die Gesamtbreite der Düse aufweist, die mit einer Steuervorrichtung zur Dickenverstellung in Verbindung steht.

18. Vorrichtung nach einem oder mehreren der Ansprüche 15 bis 17, dadurch gekennzeichnet, daß der Extruder (4) mit einer Steuervorrichtung zur kurzzeitigen Ein- oder Ausschaltung und/oder zur intermittierenden Ausstoßleistung oder zur Veränderung der Auspreßmenge in Verbindung steht.

**19.** Vorrichtung nach einem oder mehreren der Ansprüche 15 bis 18, dadurch gekennzeichnet, daß mehrere Negativtiefziehformen (1) hintereinander, nebeneinander oder karussellartig angeordnet sind.

**Claims**

1. Process for the production of mouldings or articles from thermoformable plastic sheets or webs according to the negative thermoforming process, said sheets or webs being heated to a temperature of 363 K to 533 K and, with the assistance of a pressure difference and with heating, being introduced into the negative thermoforming mould (1) and formed in the negative thermoforming mould, and the graining and/or surface decoration of the plastic sheet or plastic web being carried out by means of a negative thermoforming mould having a microporous, air-permeable mould surface, a temperature difference of more than 30 K being maintained between the colder negative thermoforming mould and the plastic sheet or plastic web, characterized in that an at least two-layer plastic sheet or plastic web (5) is heated and negatively thermoformed, which plastic sheet or plastic web (5) has a thickness of 150 $\mu$m to 5,000 $\mu$m and an upper layer or upper sheet, facing the negative thermoforming mould (1), whose flow temperature, flow temperature range or crystallite melting point is lower by 3 to 50 K than that of the lower layer or lower sheet and/or whose melt flow index (measured according to DIN 53735) MFI 170 °C/209 N/min is 1/50 to 3/5 of the melt flow index MFI 170 °C/209 N/10 min of the upper layer or upper sheet.

2. Process according to Claim 1, characterized in that an at least two-layer plastic sheet or plastic web (5) is heated and negatively thermoformed, which at least two-layer plastic sheet or plastic web (5) has a thickness of 400 to 1,500 $\mu$m and an upper layer or upper sheet, facing the negative thermoforming mould (1), whose flow temperature, flow temperature range or crystallite melting point is lower by 8 to 40 K than that of the lower layer or lower sheet and/or whose melt flow index (measured according to DIN 53735) MFI 170 °C/209 N/min is 1/20 to 1/2 of the melt flow index MFI 170 °C/209 N/10 min of the upper layer or upper sheet.

3. Process according to Claims 1 and 2, characterized in that the temperature of the negative thermoforming tool or negative thermoforming mould (1) is set to more than 80 K below the flow temperature or the flow temperature range or crystallite melting point of the plastic sheet or plastic web (5) and the latter is heated to a temperature of 413 K to 493 K, in that, directly before the thermoforming in the negative thermoforming tool, the plastic sheet or plastic web (5) is set to the same or approximately the same temperature for the upper layer or upper sheet and the lower layer or lower sheet (temperature difference maximum 20 K, preferably up to maximum 7.5 K), the upper layer or upper sheet having a higher melt flow index at this temperature than the melt flow index of the lower layer or lower sheet at this temperature setting.

4. Process according to one or more of Claims 1 to 3, characterized in that the shaping or thermoforming temperature directly before and/or during the forming is set such that it is the same as or higher than the flow temperature, the flow temperature range and/or the crystallite melting point of the upper layer or upper sheet and at the same time is lower than the flow temperature, the flow temperature range and/or the crystallite melting point of the lower layer or lower sheet.

5. Process according to one or more of Claims 1 to 4, characterized in that the upper layer or upper sheet and the lower layer or lower sheet contain an amorphous proportion in the thermoplastic, the upper layer or upper sheet at the temperature setting directly before the forming in the negative thermoforming tool, being preferably in or above the flow temperature range or in the thermoplastic range, whereas the lower layer or lower sheet is in the flow temperature range with a lower melt flow index at this temperature, preferably just before the flow temperature range in the thermoelastic range or in the upper quarter of the thermoelastic range.

6. Process according to one or more of Claims 1 to 5, characterized in that the upper layer or upper sheet and the lower layer or lower sheet contain a partly crystalline proportion in the thermoplastic, the temperature setting for the shaping being in or in the vicinity just below the crystallite melting range of the lower layer or lower sheet, whereas the upper layer or upper sheet is in the crystallite melting range or above the crystallite melting range with a higher melt flow index than that of the lower layer or lower sheet, preferably in the thermoplastic range.

7. Process according to one or more of Claims 1 to 6, characterized in that the composite sheets are produced by extrusion, calendering and/or laminating processes, preferably coextruded, preferably both the upper layer or upper sheet and the lower layer or lower sheet consisting of a plastic blend or a plastic alloy which contain the same plastics, but in different concentrations by weight, based on the individual layers or sheets, or both the upper layer or upper sheet and the lower layer or lower sheet consist of at least two different plastics and have qualitatively and quantitatively different compositions.

8. Process according to one or more of Claims 1 to 7, characterized in that, instead of a thermoformable plastic sheet or a thermoformable plastic-containing web (5), an at least two-layer plastic coextrudate in the form of a web-shaped melt which is applied preferably without additional heating, utilising the heat capacity of the melt web, to an edge or frame of the porous negative thermoforming mould (1) and/or of the pressure chamber or subatmospheric pressure chamber in which the negative thermoforming mould (1) is arranged, and is guided with uniform or virtually uniform movement of the slit-die extruder (4) and/or of the negative thermoforming mould (1) in at least one direction, the coextrudate covering at least one negative thermoforming mould on the mould surface up to and including the edge or frame, the coextruded web being sealed and held at the edge or frame and being formed in the negative thermoforming process using a pressure difference, preferably using a subatmospheric pressure applied from the negative thermoforming mould, the output amount of the plastic coextrudate, preferably during the thermoforming operation, being guided discontinuously or intermittently and being preferably set to zero or reduced to a lower output rate.

9. Process according to one or more of Claims 1 to 7, characterized in that, instead of a thermoformable plastic sheet or a thermoformable plastic-containing web (5), an at least two-layer plastic extrudate in the form of a web-shaped melt is used, preferably without additional heating, utilising the heat capacity of the melt web, is grasped by a conveyor device, preferably a conveyor chain (8), a conveyor clamp, a conveyor belt and/or a gripper device, and is guided from the extruder, starting above the negative thermoforming mould (1), with a velocity in dependence on the output rate and the melt thickness so that the melt web lies at least on the edges of the negative thermoforming mould and/or the edges or clamping frame of a pressure chamber or subatmospheric pressure chamber in which the negative thermoforming mould (1) is arranged, in arranged at a distance from the negative thermoforming mould surface and is sealed with at least one sealing frame or upper part of the clamping frame (6), and is formed, in the negative thermoforming process, using a pressure difference, preferably using a subatmospheric pressure applied from the negative thermoforming mould, during the thermoforming operation, the output amount of the plastic extrudate being set to zero or reduced to a lower output rate.

10. Process according to Claims 8 and 9, characterized in that the coextruded web sealed and held in the frame by a clamping or sealing frame (6) or similar sealing device is held by an air cushion enclosed in the negative thermoforming mould and/or an air cushion enclosed in the pressure chamber or subatmospheric pressure chamber in which the negative thermoforming mould (1) is located or by the support gas, preferably by air, blown in above the negative thermoforming mould, the coextruded web (5) being preferably bulged towards the negative thermoforming mould (1).

11. Process according to one or more of Claims 8 and 10, characterized in that the coextruded web (5) sealed and held in the frame is bulged towards the negative thermoforming mould and is preformed by a positive plug (7) which has the form of the negative thermoforming mould (1) (in positive form) entirely or in partial regions.

12. Process according to one or more of Claims 1 to 11, characterized in that the temperature of the plug (7) is set to more than 60 K, preferably to more than 100 K, below that of the flow temperature, the flow temperature range or the crystallite melting point of the plastic sheet or plastic web.

13. Process according to one or more of Claims 1 to 12, characterized in that the plastic used for the plastic blend or plastic alloy of the upper layer or upper sheet and lower layer or lower sheet is a polyolefin, preferably a propylene homopolymer, propylene copolymer, propylene block polymer or propylene graft polymer (hard phase) and at least one further thermoplastic or a thermoplastic elastomer with a lower flow temperature, lower flow temperature range or crystallite melting point range or a higher melt flow index (flexible phase), the thermoplastic or the thermoplastic elastomer containing, as at least one component, an alloy, a copolymer, graft polymer, block polymer or terpolymer of or with an acrylonitrile, diene, butadiene, ethylene-butylene and/or styrene, preferably ethylene-butylene-styrene triblockpolymer (SEBS) and/or other styrene block polymers, ethylene-propylene-diene graft polymer or copolymer (EPDM), cross-linked or partly cross-linked natural rubber (NR), cross-linked or partly cross-linked nitrile-butadiene rubber (NBR) and/or ethylene-propylene copolymer or graft polymer (EPM), the proportion by weight (based on 100% by weight of the plastic of the respective layer or sheet) of the polyolefin, preferably propylene homopolymer, propylene copolymer, propylene block polymer or propylene graft polymer, in the lower sheet or lower layer being more than 3% by weight, preferably more than 10% by weight, higher than in the upper layer or upper sheet and/or the proportion by weight (based on 100% by weight of the plastic in the respective sheet or layer) of the further thermoplastic or thermoplastic elastomer in the lower sheet or lower layer being more than 3% by weight, preferably more than 10% by weight, lower than in the upper layer or upper sheet.

14. Process according to one or more of Claims 1 to 12, characterized in that the plastics used as plastic blend or plastic alloy in the upper layer or upper sheet and lower layer or lower sheet are those which contain or consist of a polystyrene (PS), polyamide (PA), styreneacrylonitrile copolymer or graft polymer (SAN), acrylonitrile-butadiene-styrene copolymer or graft polymer (ABS) and/or acrylate-styrene-acrylonitrile copolymer or graft polymer (ASA) (hard phase) and at least one further thermoplastic or a thermoplastic elastomer with a lower flow temperature or lower flow temperature range, crystallite melting point or crystallite melting point range or a higher melt flow index (flexible phase), the thermoplastic or the thermoplastic elastomer containing or consisting of, as at least one component an alloy, a copolymer, graft polymer, block polymer or terpolymer of at least one of the following compounds: alkene or alkenyl ($C_1$-$C_4$)-alkyl ($C_1$-$C_8$) acrylate-carbonmonoxide terpolymer, alkene or alkenyl ($C_1$-$C_4$)-alkyl ($C_1$-$C_8$)-methacrylate-carbonmonoxide terpolymer, alkene or alkenyl ($C_1$-$C_4$)-alkyl ($C_1$-$C_8$)-acrylate copolymer, alkene or alkenyl ($C_1$-$C_4$)-alkyl ($C_1$-$C_8$) methacrylate copolymer with an alkyl-acrylate content or alkyl-methacrylate content of more than 12% by weight (based on the respective plasticiser containing polar groups with 100 parts by weight) and with statistically distributed acrylate or methacrylate groups or alkyl acrylate or alkyl methacrylate groups, preferably ethylene-butyl acrylate-carbonmonoxide terpolymer, ethylene-hexyl acrylate-carbonmonoxide terpolymer, ethylene-butyl acrylate copolymer, ethylene-hexyl acrylate copolymer, ethylene-vinyl acetate copolymer and/or ethylene-vinyl acetate-carbonmonoxide terpolymer and/or ethylene-propylene-diene copolymer or graft polymer (EPDM), ethylene-propylene copolymer or graft polymer (EPM), cross-linked or partly cross-linked natural rubber (NR), cross-linked and/or partly cross-linked nitrile-butadiene rubber (NBR) and/or thermoplastic polyurethane or thermoplastic polyether ester, the proportion by weight (based on 100% by weight of plastic of the respective layer or sheet) of the plastics of the hard phase, including the acrylonitrile-butadiene-styrene copolymer or graft polymer (ABS) in the lower sheet or lower layer being more than 3% by weight, preferably more than 7% by weight, higher than in the upper layer or upper sheet and/or the proportion by weight (based on 100% by weight of the plastic in the respective sheet or layer) of the further thermoplastic or thermoplastic elastomer in the lower sheet or lower layer being more than 3% by weight, preferably more than 7% by weight, lower than in the upper layer or upper sheet.

15. Device consisting of an extruder and a negative thermoforming mould (1) which has a microporous, air-permeable mould surface which is connected to a cooling device, characterized in that the negative thermoforming mould (1) has assigned to it an extruder (4) with a slit-die and the extruder (4) and/or the negative thermoforming mould are arranged so as to be movable and/or pivotable in at least one direction.

16. Device according to Claim 15 characterized in that the negative thermoforming mould (1) has assigned to it a slit-die extruder (4) at the die opening of which a conveyor device for guiding and for conveying the melt web is arranged.

17. Device according to one of Claims 15 or 16, characterized in that the slit-die extruder has, over the entire width of the die, a thickness adjustment means which is connected to a control device for thickness adjustment.

18. Device according to one or more of Claims 15 to 17, characterized in that the extruder (4) is connected to a control device for momentary switching on or switching off and/or for intermittent output

15

EP 0 363 595 B1

performance or for varying the discharge rate.

19. Device according to one or more of Claims 15 to 18, characterized in that a plurality of negative thermoforming moulds (1) are arranged one behind the other, adjacent to one another or in the manner of a carousel.

**Revendications**

1. Procédé pour la fabrication d'éléments moulés ou d'objets à partir de feuilles ou de bandes thermoformables en matière synthétique conformément au procédé d'emboutissage négatif, dans lequel ces dernières sont chauffées à une température de 363 K à 533 K et introduites dans le moule d'emboutissage négatif (1) en utilisant conjointement une différence de pression et en chauffant, et sont formées dans le moule d'emboutissage négatif, et le grainage et/ou la décoration superficielle de la feuille ou de la bande synthétique a lieu à l'intervention d'un moule d'emboutissage négatif présentant une surface de moulage microporeuse perméable à l'air, dans lequel, entre le moule d'emboutissage négatif plus froid et la feuille ou la bande en matière synthétique, on maintient une différence de température de plus de 30 K, caractérisé en ce qu'une feuille ou une bande (5) en matière synthétique au moins à deux couches ayant une épaisseur de 150 $\mu$m à 5 000 $\mu$m et comprenant une couche supérieure ou une feuille supérieure orientée en direction du moule d'emboutissage négatif (1), dont la température de fluage, le domaine de température de fluage ou la température de fusion cristalline est inférieure de 3 à 50 K à celle de la couche inférieure ou de la feuille inférieure, et/ou dont l'indice de fusion (mesuré d'après la norme DIN 53735) MFI 170 °C/209 N/min représente 1/50 à 3/5 de l'indice de fusion MFI 170 °C/209 N/10 min de la couche supérieure ou de la feuille supérieure, est chauffée et soumise à un moulage par emboutissage négatif.

2. Procédé selon la revendication 1, caractérisé en ce qu'une feuille ou une bande (5) en matière synthétique au moins à deux couches, ayant une épaisseur de 400 à 1 500 $\mu$m, comprenant une couche supérieure ou une feuille supérieure orientée en direction du moule d'emboutissage négatif (1) dont la température de fluage, le domaine de température de fluage ou la température de fusion cristalline est inférieure de 8 à 40 K à celle de la couche inférieure ou de la feuille inférieure et/ou dont l'indice de fusion (mesuré d'après la norme DIN 53735) MFI 170 °C/209 N/min représente 1/20 à 1/2 de l'indice de fusion MFI 170 °C/209 N/10 min de la couche supérieure ou de la feuille supérieure, est chauffée et soumise à un moulage par emboutissage négatif.

3. Procédé selon les revendications 1 et 2, caractérisé en ce que la température de l'outil d'emboutissage négatif ou du moule d'emboutissage négatif (1) est réglée
   à plus de 80 K
   en dessous de la température de fluage ou du domaine de température de fluage ou encore de la température de fusion cristalline de la feuille ou de la bande (5) en matière synthétique, et cette dernière étant chauffée à une température de
   413 K à 493 K;
   en ce que la feuille ou la bande (5) en matière synthétique, immédiatement avant le thermoformage dans l'outil d'emboutissage négatif, est réglée à une valeur de température identique ou approximativement identique pour la couche ou feuille supérieure et pour la couche ou feuille inférieure (différence maximale de température 20 K, de préférence jusqu'à maximum 7,5 K), la couche ou feuille supérieure présentant à cette valeur de température un indice de fusion supérieur à l'indice de fusion de la couche ou feuille inférieure à ce réglage de température.

4. Procédé selon l'une ou plusieurs des revendications 1 à 3, caractérisé en ce que la température de formage ou d'emboutissage négatif est réglée, immédiatement avant et/ou lors du formage, de telle sorte qu'elle soit analogue ou supérieure à la température de fluage, au domaine de température de fluage et/ou à la température de fusion cristalline de la couche supérieure ou de la feuille supérieure, et simultanément inférieure à la température de fluage, au domaine de température de fluage et/ou à la température de fusion cristalline de la couche inférieure ou de la feuille inférieure.

5. Procédé selon l'une ou plusieurs des revendications 1 à 4, caractérisé en ce que la couche supérieure ou la feuille supérieure et la couche inférieure ou la feuille inférieure contiennent une fraction amorphe dans la matière thermoplastique, la couche supérieure ou la feuille supérieure, lors du réglage de

16

température immédiatement avant le formage dans l'outil d'emboutissage négatif, se situant de préférence dans le domaine de température de fluage ou au-dessus de ce dernier ou encore dans le domaine thermoplastique, tandis que la couche inférieure ou la feuille inférieure se situe dans le domaine de température de fluage avec un indice de fusion inférieur, à cette température, de préférence se situe juste en dessous du domaine de température de fluage, dans le domaine thermoélastique, ou encore dans le quart supérieur du domaine thermoélastique.

6. Procédé selon l'une ou plusieurs des revendications 1 à 5, caractérisé en ce que la couche supérieure ou la feuille supérieure et la couche inférieure ou la feuille inférieure contiennent une fraction partiellement cristalline dans la matière thermoplastique, dans lequel le réglage de température pour le formage se situe dans le domaine de fusion cristalline de la couche inférieure ou de la feuille inférieure, ou bien à proximité juste en dessous de ce dernier, tandis que la couche supérieure ou la feuille supérieure se situe dans le domaine de fusion cristalline ou au-dessus du domaine de fusion cristalline avec un indice de fusion supérieur à celui de la couche inférieure ou de la feuille inférieure, de préférence se situe dans le domaine thermoplastique.

7. Procédé selon l'une ou plusieurs des revendications 1 à 6, caractérisé en ce que les feuilles stratifiées sont préparées par des procédés d'extrusion, de calandrage et/ou de laminage, de préférence sont coextrudées, dans lequel de préférence aussi bien la couche supérieure ou la feuille supérieure que la couche inférieure ou la feuille inférieure sont constituées par un mélange de matières synthétiques ou par un alliage de matières synthétiques qui contient les mêmes matières synthétiques, toutefois dans des concentrations en poids différentes, par rapport aux couches ou aux feuilles individuelles, ou bien aussi bien la couche supérieure ou la feuille supérieure que la couche inférieure ou la feuille inférieure sont constituées au moins de deux matières synthétiques différentes et présentent des compositions différentes du point de vue qualitatif et du point de vue quantitatif.

8. Procédé selon l'une ou plusieurs des revendications 1 à 7, caractérisé en ce que, au lieu d'une feuille thermoformable en matière synthétique ou d'une bande (5) contenant une matière synthétique thermoformable, on applique un coextrudat en matière synthétique au moins à deux couches sous forme d'une masse fondue ayant la forme d'une bande, qui est disposé de préférence sans chauffage supplémentaire, en utilisant la capacité thermique de la bande en fusion, sur un bord ou sur le cadre du moule poreux (1) d'emboutissage négatif et/ou de la chambre de pression ou de dépression dans laquelle est disposé le moule d'emboutissage négatif (1), et qui est guidé avec un mouvement uniforme ou pratiquement uniforme de l'extrudeuse (4) à filière plate et/ou du moule d'emboutissage négatif (1) dans au moins une direction, le coextrudat recouvrant au moins un moule d'emboutissage négatif sur la surface de moulage, jusqu'à et y compris le bord ou le cadre, la bande coextrudée étant maintenue de manière étanche contre le bord ou le cadre et formée dans le procédé d'emboutissage négatif en utilisant une différence de pression, de préférence en utilisant une dépression appliquée à partir du moule d'emboutissage négatif, dans lequel, de préférence, au cours du processus d'emboutissage négatif, la quantité éjectée d'extrudat de matière synthétique est guidée en discontinu ou de manière intermittente, de préférence est réglée à zéro ou est réduite à une quantité éjectée minime.

9. Procédé selon l'une ou plusieurs des revendications 1 à 7, caractérisé en ce que, au lieu d'une feuille thermoformable en matière synthétique ou au lieu d'une bande (5) contenant une matière synthétique thermoformable, on utilise un extrudat en matière synthétique au moins à deux couches sous forme d'une masse fondue en forme de bande, qui, de préférence sans chauffage supplémentaire en utilisant la capacité thermique de la bande de masse fondue, est réceptionné sur un dispositif de transport, de préférence une chaîne de transport (8), une griffe de transport, une bande de transport et/ou un mécanisme de préhension et qui est guidé en commençant à partir de l'extrudeuse en passant par le moule d'emboutissage négatif (1), à une vitesse dépendant de la quantité d'éjection et de l'épaisseur de la masse fondue, si bien que la bande en fusion vient s'appuyer au moins contre les bords du moule d'emboutissage négatif et/ou contre les bords ou le cadre de tension d'une chambre de pression ou de dépression dans laquelle est disposé le moule d'emboutissage négatif (1), est disposée à une certaine distance de la surface du moule d'emboutissage négatif, est rendue étanche par au moins un cadre d'étanchéification ou par la partie supérieure du cadre de tension (6), et est formée dans le procédé d'emboutissage négatif en utilisant une différence de pression, de préférence en utilisant une dépression appliquée à partir du moule d'emboutissage négatif, dans lequel, au cours du processus d'emboutissage négatif, la quantité éjectée d'extrudat de matière synthétique est réglée à zéro ou est réduite à une quantité d'éjection très minime.

10. Procédé selon les revendications 8 et 9, caractérisé en ce que la bande coextrudée rendue étanche et maintenue dans le cadre à l'intervention d'un cadre de tension ou d'étanchéification (6) ou d'un dispositif d'étanchéification analogue, est maintenue par un coussin d'air retenu dans le moule d'emboutissage négatif et/ou dans la chambre de pression ou de dépression dans laquelle se trouve le moule d'emboutissage négatif (1), ou encore par un gaz de support insufflé à travers le moule d'emboutissage négatif, de préférence de l'air, dans lequel la bande coextrudée (5) est soumise à un bombement préalable, de préférence en direction du moule d'emboutissage négatif (1).

11. Procédé selon l'une ou plusieurs des revendications 8 et 10, caractérisé en ce que la bande coextrudée (5) rendue étanche et maintenue dans le cadre est soumise à un bombement préalable en direction du moule d'emboutissage négatif et est préformée par un poinçon positif (7) qui présente totalement ou dans des zones partielles la forme du moule d'emboutissage négatif (1) (en positif).

12. Procédé selon l'une ou plusieurs des revendications 1 à 11, caractérisé en ce que la température du poinçon (7) est réglée
à plus de 60 K, de préférence
à plus de 100 K
en dessous de la température de fluage, du domaine de température de fluage ou de la température de fusion cristalline de la feuille ou de la bande en matière synthétique.

13. Procédé selon l'une ou plusieurs des revendications 1 à 12, caractérisé en ce que, pour le mélange ou l'alliage de matière synthétique de la couche supérieure ou de la feuille supérieure et de la couche inférieure ou de la feuille inférieure, on utilise une polyoléfine, de préférence un homopolymère, copolymère, polymère à blocs ou polymère greffé du propylène (phase dure), et au moins une autre matière thermoplastique ou un élastomère thermoplastique à température de fluage inférieure, à domaine de température de fluage inférieur ou à domaine de température de fusion cristalline inférieur ou à indice de fusion plus élevé (phase molle), dans lequel la matière thermoplastique ou l'élastomère thermoplastique contient, à titre d'au moins un composant, un alliage, copolymère, polymère greffé, polymère à blocs ou terpolymère de ou avec un acrylonitrile, un diène, un butadiène, un éthylènebutylène et/ou un styrène, de préférence un terpolymère à blocs éthylène-butylène-styrène (SEBS) et/ou d'autres polymères à blocs du styrène, un polymère greffé ou un copolymère éthylène-propylène-diène (EPDM), du caoutchouc naturel (NR) réticulé ou partiellement réticulé, du caoutchouc nitrilebutadiène (NBR) réticulé ou partiellement réticulé, et/ou un copolymère ou polymère greffé éthylène-propylène (EPM), la fraction pondérale (rapportée à 100 % en poids de la matière synthétique de chacune des couches ou de chacune des feuilles) de la polyoléfine, de préférence de l'homopolymère, du copolymère, polymère à blocs ou polymère greffé du propylène dans la feuille inférieure ou dans la couche inférieure étant supérieure
de plus de 3 % en poids, de préférence
de plus de 10 % en poids
à celle de la couche supérieure ou de la feuille supérieure, et/ou la fraction pondérale (rapportée à 100 % en poids de la matière synthétique dans la feuille ou dans la couche respective) de l'autre matière thermoplastique ou de l'élastomère thermoplastique dans la feuille inférieure ou dans la couche inférieure étant inférieure
de plus de 3 % en poids, de préférence
de plus de 10 % en poids
à celle de la couche supérieure ou de la feuille supérieure.

14. Procédé selon l'une ou plusieurs des revendications 1 à 12, caractérisé en ce que, comme mélange ou alliage de matière synthétique de la couche supérieure ou de la feuille supérieure et de la couche inférieure ou de la feuille inférieure, on utilise ceux qui contiennent un polystyrène (PS), un polyamide (PA), un copolymère ou polymère greffé styrène-acrylonitrile (SAN), un copolymère ou polymère greffé acrylonitrile-butadiène-styrène (ABS) et/ou un copolymère ou polymère greffé ester acryliquestyrène-acrylonitrile (ASA) (phase dure) et au moins une autre matière thermoplastique ou un élastomère thermoplastique à température de fluage inférieure ou à domaine de température de fluage inférieur, à température de fusion cristalline inférieure ou encore à domaine de température de fusion cristalline inférieur ou à indice de fusion supérieur (phase molle), ou bien qui sont constitués par ces derniers,

18

dans lequel la matière thermoplastique ou l'élastomère thermoplastique, à titre d'au moins un composant, contient ou est constitué par un alliage, copolymère, polymère greffé, polymère à blocs ou terpolymère d'au moins un des composés ci-après : un terpolymère d'alcène ou d'alcényle en $C_1$-$C_4$ / acrylate d'alkyle en $C_1$-$C_8$ / monoxyde de carbone, un terpolymère d'alcène ou d'alcényle en $C_1$-$C_4$ / méthacrylate d'alkyle en $C_1$-$C_8$ / monoxyde de carbone, un copolymère d'alcène ou d'alcényle en $C_1$-$C_4$ / acrylate d'alkyle en $C_1$-$C_8$, un copolymère d'alcène ou d'alcényle en $C_1$-$C_4$ / méthacrylate d'alkyle en $C_1$-$C_8$ avec une teneur en acrylate d'alkyle ou une teneur en méthacrylate d'alkyle supérieure à 12 % en poids (calculée sur l'agent plastifiant respectif contenant des groupes polaires avec 100 parties en poids), et avec des groupes d'acrylate ou de méthacrylate ou des groupes d'acrylate d'alkyle ou de méthacrylate d'alkyle répartis de manière statistique, de préférence un terpolymère d'éthylène / acrylate de butyle / monoxyde de carbone, un terpolymère d'éthylène / acrylate d'hexyle / monoxyde de carbone, un copolymère d'éthylène / acrylate de butyle, un copolymère d'éthylène / acrylate d'hexyle, un copolymère d'éthylène / acétate de vinyle et/ou un terpolymère d'éthylène / acétate de vinyle / monoxyde de carbone et/ou un copolymère ou polymère greffé d'éthylène / propylène / diène (EPDM), un copolymère ou polymère greffé d'éthylène / propylène (EPM), du caoutchouc naturel (NR) réticulé ou partiellement réticulé, un caoutchouc nitrile-butadiène (NBR) réticulé et/ou partiellement réticulé et/ou un polyuréthane thermoplastique ou un polyéther-ester thermoplastique, dans lequel la fraction pondérale (rapportée à 100 % en poids de la matière synthétique de chacune des couches ou de chacune des feuilles) des matières synthétiques de la phase dure, y compris du copolymère ou polymère greffé d'acrylonitrile / butadiène / styrène (ABS) dans la feuille inférieure ou dans la couche inférieure, est supérieure

de plus de 3 % en poids, de préférence

de plus de 7 % en poids

à celle de la couche supérieure ou de la feuille supérieure, et/ou la fraction pondérale (rapportée à 100 % en poids de la matière synthétique dans chacune des feuilles ou dans chacune des couches) des autres matières thermoplastiques ou élastomères thermoplastiques dans la feuille inférieure ou dans la couche inférieure, est inférieure

de plus de 3 % en poids, de préférence

de plus de 7 % en poids

à celle de la couche supérieure ou de la feuille supérieure.

15. Dispositif constitué par une extrudeuse et un moule d'emboutissage négatif (1) présentant une surface de moulage microporeuse perméable à l'air, et relié à un mécanisme de refroidissement, caractérisé en ce que, au moule d'emboutissage négatif (1), est combiné une extrudeuse (4) à filière plate et en ce que l'extrudeuse (4) et/ou le moule d'emboutissage négatif sont disposés de manière à pouvoir se déplacer et/ou pivoter dans au moins une direction.

16. Dispositif selon la revendication 15, caractérisé en ce que, au moule d'emboutissage négatif (1), est combiné une extrudeuse (4) à filière plate contre l'ouverture de la filière de laquelle est disposé un dispositif de transport pour le guidage et le transport de la bande en fusion.

17. Dispositif selon l'une quelconque des revendications 15 ou 16, caractérisé en ce que la filière plate présente sur toute la largeur de la filière un réglage en épaisseur qui est en liaison avec un mécanisme de commande pour le réglage de l'épaisseur.

18. Dispositif selon l'une ou plusieurs des revendications 15 à 17, caractérisé en ce que l'extrudeuse (4) se trouve en liaison avec un dispositif de commande pour la mise en circuit ou hors-circuit instantanée et/ou pour le fonctionnement d'éjection intermittent ou pour la modification de la quantité éjectée.

19. Dispositif selon l'une ou plusieurs des revendications 15 à 18, caractérisé en ce que plusieurs moules négatifs (1) d'emboutissage sont disposés l'un derrière l'autre, l'un à côté de l'autre ou à la manière d'un carrousel.

Fig. 1

A

B

Fig. 2

IA          IB          IC          II

Fig. 3

I      II      III      IV      V      VI      VII      VIII      IX

Fig. 4

I     II     III     IV

4  5  8     7  6     9

2  3  1